# EUROPÄISCHE PATENTSCHRIFT

(11) **EP 0 976 680 B1**
(45) Veröffentlichungstag und Bekanntmachung des Hinweises auf die Patenterteilung: **28.04.2004**
(21) Anmeldenummer: 99114220.9
(22) Anmeldetag: 26.07.1999
(51) Int. Cl.: C01B 33/06, C22C 33/02

(54) **Carbonyleisensilizid-Pulver**
Carbonyl iron silicide powder
Poudre de siliciure de fer carbonyle

(30) Priorität: 29.07.1998 DE 19834236
(43) Veröffentlichungstag der Anmeldung: 02.02.2000
(73) Patentinhaber: BASF AKTIENGESELLSCHAFT, 67056 Ludwigshafen (DE)
(72) Erfinder: Schlegel, Reinhold, 67454 Hassloch (DE); Friedrich, Gabriele, Dr., 68165 Mannheim (DE)
(74) Vertreter: Isenbruck, Günter, Dr.

(56) Entgegenhaltungen:
- US-A- 5 866 273
- DATABASE INSPEC [Online] INSTITUTE OF ELECTRICAL ENGINEERS, STEVENAGE, GB HYONG KYU LEE ET AL: "Magnetic properties of sintered iron silicon alloys" Database accession no. 1691792 XP002123084 & JOURNAL OF THE KOREAN INSTITUTE OF METALS, AUG. 1980, SOUTH KOREA, Bd. 18, Nr. 4, Seiten 345-351, ISSN: 0253-3847
- DATABASE WPI Section Ch, Week 199002 Derwent Publications Ltd., London, GB; Class L03, AN 1990-011078 XP002123028 & JP 01 290704 A (DAIDO TOKUSHUKO KK), 22. November 1989 (1989-11-22)

## Beschreibung

Die Erfindung betrifft ein Verfahren zur Herstellung von Carbonyleisensilizid durch Wärmebehandlung einer Eisen-Silizium-Mischung bei einer Temperatur zwischen 500 und 1100°C.

Feinteilige Eisenpulver, bei denen es auf einen geringen Anteil an Nebenbestandteilen ankommt, werden für eine Vielzahl von Anwendungen in der Pulvermetallurgie, der Elektrotechnik, in Chemie und Pharmazie benötigt. Für bestimmte Anwendungen ist neben der hohen Reinheit ein definierter Siliziumgehalt der Pulver wünschenswert. So ist bekannt, daß der Zusatz von Silizium die magnetischen Eigenschaften der Eisenpulver beeinflußt. Aus der Literatur ist ferner die katalytische Wirkung von Eisen-Silizium-Legierungen, beispielsweise bei der Hydrierung von CO im Fischer-Tropsch-Verfahren, bekannt. Auch sind Eisen-Silizium-Legierungen gegenüber Umwelteinflüssen beständiger als reines Eisen.

Hochreine, siliziumhaltige Eisenpulver können durch Gasphasenreaktion von flüchtigen Eisen- und Siliziumverbindungen erhalten werden. Ein solches Verfahren beschreibt die prioritätsältere, nicht-vorveröffentlichte DE-A 197 16 882. Daneben kommt die Herstellung aus den Elementen in Betracht.

Die Herstellung von hochreinen, siliziumhaltigen Eisenpulvern aus den Elementen erfolgt heute vielfach durch sogenanntes mechanisches Legieren ("mechanical alloying"), z. B. durch Mahlen der Rohstoffe in Kugelmühlen. Verfahren des mechanical alloying werden in V E. Martin et al., IEEE Trans. Magn. 26 (1990), Seite 2223 - 25 und in M. Abdellaoui et al., J. Phys. IV (1992), C3, Seite 73-78 beschrieben. Nachteilig an diesen Verfahren sind die sehr langen Verarbeitungszeiten, die von einigen zehn bis einigen hundert Stunden reichen.

Thermische Verfahren zur Herstellung von Eisen-Silizium-Legierungen sind beispielsweise in DD-A 228 673 und EP-A O 335 213 beschrieben. Dabei werden Element- und Legierungspulver unter hohem Druck verpresst und gesintert. Diese Verfahren zielen nicht auf die Herstellung von Pulvern ab, es werden vielmehr fertige Formkörper wie Magnetkerne und Thermoelemente erhalten.

In T. H. Song et al., J. Mater. Sci. Lett. 14 (1995), Seite 1715 - 17 ist die Herstellung von Eisen-Silizium-Legierungen in einer "self propagating high temperature synthesis" beschrieben. Dabei wird eine Mischung aus Eisen- und Siliziumpulver mit 20 Gew.-% KNO₃ bei 100 MPa zu Tabletten verpresst und anschließend in einer Lichtbogenentladung gezündet. Das Verfahren ist verfahrenstechnisch aufwendig und wegen des Einsatzes von KNO₃ nicht ungefährlich.

Aufgabe der Erfindung ist es, für eine Vielzahl von Anwendungen geeignete Pulver aus Eisen-Silizium-Legierung nach einem einfachen und kostengünstigen Verfahren aus den Elementen herzustellen.

Gelöst wird die Aufgabe durch ein Verfahren laut Anspruch 1

Unter Carbonyleisensilizid wird Eisensilizid verstanden, das durch Legieren von Carbonyleisenpulver mit Silizium erhältlich ist.

In dem erfindungsgemäßen Verfahren erfolgt das Legieren durch Wärmebehandlung einer Mischung aus feinteiligem Carbonyleisenpulver und Siliziumpulver.

Unter feinteiligem Carbonyleisen werden erfindungsgemäß Carbonyleisenpulver und Carbonyleisenwhiskers verstanden.

Carbonyleisenpulver und Carbonyleisenwhisker können nach bekannten Verfahren durch thermische Zersetzung von Eisenpentacarbonyl in der Gasphase erhalten werden, z.B. wie in Ullmann's Encyclopedia of Industrial Chemistry, 5th Edition, Vol. A 14, Seite 599 bzw. in DE-A 34 28 121 oder in DE-A 39 40 347 beschrieben, und bestehen aus besonders reinem metallischem Eisen. Die hohe Reinheit der Pulver bzw. Whiskers wird durch die hohe Reinheit des Eisenpentacarbonyls bedingt. Je nach Zersetzungsbedingungen (Druck, Temperatur) werden Pulver oder Whiskers gebildet.

Carbonyleisenpulver ist ein graues, feinteiliges Pulver aus metallischem Eisen mit einem geringen Gehalt an Nebenbestandteilen, das im wesentlichen aus kugelförmigen Teilchen mit einem mittleren Teilchendurchmesser bis 10 µm besteht.

In dem erfindungsgemäßen Verfahren können mechanisch harte, nicht reduzierte Carbonyleisenpulver oder mechanisch weiche, reduzierte Carbonyleisenpulver verwendet werden.

Die in dem erfindungsgemäßen Verfahren bevorzugt verwendeten nichtreduzierten Carbonyleisenpulver weisen einen Eisengehalt von > 97 Gew.-%, einen Kohlenstoffgehalt von < 1,0 Gew.-%, einen Stickstoffgehalt von < 1,0 Gew.-% und einen Sauerstoffgehalt von < 0,5 Gew.-% auf Der mittlere Teilchendurchmesser der Pulverteilchen liegt vorzugsweise zwischen 1 und 10 im, besonders bevorzugt zwischen 1,5 und 5,0 µm, ihre spezifische Oberfläche (BET) liegt vorzugsweise zwischen 0,2 und 2,5 m²/g.

Die in dem erfindungsgemäßen Verfahren bevorzugt verwendeten reduzierten Carbonyleisenpulver weisen einen Eisengehalt von > 99,5 Gew.-%, einen Kohlenstoffgehalt von < 0,05 Gew.-%, einen Stickstoffgehalt von < 0,1 Gew.-% und einen Sauerstoffgehalt von < 0,6 Gew.-% auf Der mittlere Teilchendurchmesser der Pulverteilchen beträgt bevorzugt 1 bis 8 µm, besonders bevorzugt 2 bis 8 µm. Die spezifische Oberfläche der Pulverteilchen beträgt vorzugsweise 0,2 bis 2,5 m²/g.

Carbonyleisenwhiskers sind sehr feine, polykristalline Eisenfäden. Die in dem erfindungsgemäßen Verfahren bevorzugt verwendeten Carbonyleisenwhiskers bestehen aus fadenförmigen Anordnungen von Kügelchen mit Durchmessern der Kügelchen zwischen 0,1-1 µm, wobei die Fäden unterschiedliche Länge haben und Knäuel bilden können, und weisen einen Eisengehalt von > 83,0 Gew.-%, einen Kohlenstoffgehalt von < 8,0 Gew.-%, einen Stickstoffgehalt von < 4,0 Gew.-% und einen Sauerstoffgehalt von < 7,0 Gew.-% auf.

Die in dem erfindungsgemäßen Verfahren bevorzugt verwendeten Carbonyleisenpulver und -whiskers weisen einen sehr geringen Gehalt an Fremdmetallen auf, der zumeist unterhalb der Nachweisgrenze der Atomabsorptionsanalyse liegt und auf der Herstellung aus der sehr reinen Ausgangsverbindung Eisenpentacarbonyl beruht. U. a. enthalten die Carbonyleisenpulver folgende Anteile an weiteren Fremdelementen: Nickel < 100 ppm, Chrom < 150 ppm, Molybdän < 20 ppm, Arsen < 2 ppm, Blei < 10 ppm, Cadmium < 1 ppm, Kupfer < 5 ppm, Mangan < 10 ppm, Quecksilber < 1 ppm, Schwefel < 10 ppm, Silizium < 10 ppm und Zink < 10 ppm.

Vorzugsweise werden in dem erfindungsgemäßen Verfahren Carbonyleisenpulver verwendet.

Als feinteiliges Silizium kann in dem erfindungsgemäßen Verfahren handelsübliches Siliziumpulver eingesetzt werden. Vorzugsweise wird ein Siliziumpulver hoher Reinheit eingesetzt. Der Siliziumgehalt der eingesetzten Siliziumpulver beträgt im allgemeinen > 95 Gew.-%, bevorzugt > 98 Gew.-%, besonders bevorzugt > 99 Gew.-%. Der Anteil an Fremdmetallen (außer Eisen) beträgt im allgemeinen < 2 Gew.-%, bevorzugt < 1 Gew.-%, besonders bevorzugt < 0,5 Gew.-%. Die mittlere Korngröße der eingesetzten Siliziumpulver beträgt im allgemeinen < 1000 µm, bevorzugt < 500 µm.

Die Herstellung des Carbonyleisensilizids erfolgt durch intensives Vermischen des feinteiligen Carbonyleisens mit dem Siliziumpulver und anschließender Wärmebehandlung. Der Siliziumanteil der Mischung beträgt im allgemeinen 0,1 bis 80 Gew.-%, bevorzugt 0,5 bis 30 Gew.-%, besonders bevorzugt 1 bis 20 Gew.-%. Die Wärmebehandlung erfolgt im allgemeinen in der Weise, daß die Eisen-Silizium-Mischung innerhalb eines Zeitraums von 20 bis 80, bevorzugt 30 bis 60 min auf eine Umsetzungstemperatur von im allgemeinen ≥ 700°C, bevorzugt ≥ 900°C, besonders bevorzugt zwischen 900°C und 1100°C, insbesondere auf eine Temperatur um 1000 °C aufgeheizt wird und über einen Zeitraum von 80 bis 160 min, bevorzugt 100 bis 140 min bei dieser Temperatur belassen wird.

In einer weiteren Ausführungsform enthält die Eisen-Silizium-Mischung neben Carbonyleisen und Silizium zusätzlich noch elementares Kupfer und/oder mindestens eine Kupferverbindung, elementares Aluminium und/oder mindestens eine Aluminiumverbindung oder elementares Cobalt und/oder mindestens eine Cobaltverbindung, in Anteilen von 0,01 bis 5 Gew.-%, bevorzugt 0,1 bis 2 Gew.-%. Bevorzugte Kupferverbindungen sind Kupfer(II)salze wie Kupfer(II)sulfat oder Kupfer(II)oxalat, besonders bevorzugt ist Kupfer(II)sulfat.

Der Zusatz von Kupfer und/oder Kupferverbindungen, Aluminium und/oder Aluminiumverbindungen oder Cobalt und/oder Cobaltverbindungen hat den überraschenden Effekt, daß unter sonst gleichen Bedingungen bei wesentlich niedrigeren Umsetzungstemperaturen gearbeitet werden kann. Die Umsetzungstemperatur liegt dann im allgemeinen oberhalb 500°C, bevorzugt oberhalb 700°C, besonders bevorzugt zwischen 700 und 900°C, insbesondere um 800°C.

Die Wärmebehandlung kann an den locker gemischten Ausgangskomponenten ohne vorheriges Verpressen zu Formkörpern durchgeführt werden. Um die Bildung von Oxiden auszuschließen, wird die Wärmebehandlung vorzugsweise unter Ausschluß von atmosphärischem Sauerstoff in einer Schutzgasatmosphäre durchgeführt. Als Schutzgase können vollständig inerte Gase - beispielsweise Argon - oder reduzierende Gase - vorzugsweise Wasserstoff - sowie deren Mischungen eingesetzt werden. Bei Verwendung von Wasserstoff als Schutzgasbestandteil werden bei der Bildung des Eisensilizids Nebenbestandteile wie Kohlenstoff, Sauerstoff und Stickstoff zumindest teilweise zu den entsprechenden flüchtigen Wasserstoff-verbindungen reduziert und somit ein besonders reines Produkt erhalten. Auf diese Weise können beispielsweise der Kohlenstoffgehalt auf < 0,1 Gew.-% und der Stickstoffgehalt auf < 0,01 Gew.-% gesenkt werden. Der Anteil der Nebenbestandteile Sauerstoff, Kohlenstoff und Stickstoff wirkt sich insbesondere auf die mechanischen Eigenschaften des gebildeten Carbonyleisensilizids aus. In einer bevorzugten Ausführungsform wird die Wärmebehandlung in einer Wasserstoffatmosphäre oder wasserstoffhaltigen Atmosphäre durchgeführt. Bevorzugt wird bei Atmosphärendruck gearbeitet. In einer bevorzugten Ausführungsform des erfindungsgemäßen Verfahrens wird das bei der Wärmebehandlung erhaltene Produkt mechanisch zu Pulver zerkleinert. Die mittlere Teilchengröße der erhaltenen Carbonyleisensilizid-Pulver beträgt im allgemeinen 0,1 bis 1000 µm, bevorzugt 1 bis 50 µm.

Das gebildete Carbonyleisensilizid kann neben Eisen und Silizium unter anderem eine oder mehrere der Phasen FeSi, Fe₃Si (C, Gupeiite und Suessite), Fe₅Si₃ (Xifengite), Fe₅Si und FeSi₂ enthalten. Vorteilhaft ist insbesondere der geringe Anteil an Fremdmetallen, der typischerweise < 1 Gew.-%, bevorzugt < 0,5 Gew.-%, besonders bevorzugt < 0,1 Gew.-% beträgt. Im einzelnen kann der Gehalt an Nickel < 100 ppm, Chrom < 150 ppm, Molybdän < 20 ppm, Arsen < 2 ppm, Blei < 10 ppm, Cadmium < 1 ppm, Mangan < 10 ppm, Quecksilber < 1 ppm und Zink < 10 ppm betragen. Der Fremdmetallgehalt kann mittels Atomabsorptions-Spektralanalyse bestimmt werden.

Vorteilhaft ist ferner, daß das erfindungsgemäße Verfahren unter milden Bedingungen und verfahrenstechnisch einfach durchgeführt werden kann. So genügt einfaches, druckloses (d. h. ohne Anwendung von Überdruck) Erhitzen der Ausgangskomponenten in Schutzgasatmosphäre. Überraschend sind insbesondere die niedrigen Temperaturen und die kurzen Umsetzungszeiten, bei denen es unter diesen Bedingungen zur Bildung von Eisensilizid kommt. So kann eine Wärmebehandlung von 1 bis 2 h unter den vorstehend genannten Bedingungen bereits ausreichend sein. Das erfindungsgemäße Verfahren kann so durchgeführt werden, daß die Struktur des eingesetzten Carbonyleisens im gebildeten Carbonyleisensilizid im wesentlichen erhalten bleibt, was sich unter anderem positiv auf dessen elektromagnetische Eigenschaften auswirken kann.

Das laut Anspruch 1 hergestellte Carbonyleisensilizid läßt sich zu mikrowellenabsorbierenden Materialien verarbeiten. Dazu können die Pulver in plastische oder gummiartige Werkstoffe wie auch in Lacksysteme eingebracht werden. Das erfindungsgemäße Carbonyleisensilizid läßt sich ferner zu weichmagnetischen Formkörpern für elektronische Bauelemente, beispielsweise zu Magnetkernen, verpressen.

Das laut Anspruch 1 hergestellte Carbonyleisensilizid weist aufgrund seines Siliziumgehaltes eine erhöhte Korrosionsstabilität und eine höhere Induktivität im Vergleich zu Carbonyleisenpulver auf Daher ist es breit einsetzbar.

Die Erfindung wird durch die nachstehenden Beispiele näher erläutert.

### Beispiele 1 bis 20

In einer Analysemühle werden Carbonyleisenpulver (BASF AG, Ludwigshafen, DE) der angegebenen Sorte und Siliziumpulver SiMP2 von H. C. Starck (Spezifikation: Si > 98 Gew.-%, C 0,04 Gew.-%, O 1,17 Gew.-%, Fe 0,27 Gew.-%, Al 0,15 Gew.-%, Ca 0,08 Gew.-%) bzw. Merck-Siliziumpulver (Spezifikation: Si > 99 %, mit HF bzw. HNO₃ nicht flüchtige Bestandteile < 0,5 %) während ca. 1 min vermahlen. Die Pulvermischung wird in Quarzschiffchen gefüllt in ein beheizbares Rohr aus Quarzglas gegeben. Das Quarzglasrohr wird zunächst bei Raumtemperatur mit Argon, dann mit Wasserstoff gespült und unter Wasserstoffspülung zunächst auf 400 °C aufgeheizt. Anschließend wird im Wasserstoffstrom (10 bis 20 Nl/h) innerhalb von 1 bis 2 h auf die in der Tabelle angegebene Temperatur aufgeheizt, diese Temperatur ca. 1 bis 2 h gehalten und auf Raumtemperatur abgekühlt. Entweichende kondensierbare Umsetzungsprodukte, unter anderem H₂O, NH₃, werden in einer Kühlfalle am Ausgang des Rohres bei -78°C auskondensiert. Es wird ein graues, zum Teil verbackenes Produkt erhalten, daß an der Luft zerstoßen werden kann. Laut diffraktometrischer Analyse enthält das Produkt neben Eisen die Phasen FeSi, Fe₃Si, Fe₅Si₃ und FeSi₂.

Die Tabelle faßt die Ergebnisse zusammen.

### Zusammensetzung der Pulver [in Gew.-%]:

Beispiel 8: Fe 85; Si 10,2; C 3,6; H < 0,5; N < 0,5; O 0,23
Beispiel 9: Fe 88; Si 10,2; C < 0,5; H < 0,5; N < 0,5; O 0,05
Beispiel 10: Fe 88; Si 9,7; C < 0,5; H < 0,5; N < 0,5; O 0,05
Beispiel 19: Fe 89,4; Si 9,9; C 0,46; H < 0,5; N < 0,5; O 0,05

### Messungen der Induktivität der Carbonyleisensilicid-Pulver

Die Messungen wurden mit einem HP-Meßgerät Q-Meter 4342 an Ringkemen (Toroid) der Maße 20,4 x 12,4 mm durchgeführt. Die Ringkerne wurden durch Verpressen des entsprechenden Carbonyleisensilicid- bzw. Cabonyleisenpulvers mit 4,5 % Epicote (Binder) bei einem Preßdruck von 0,345 GPa hergestellt und mit 0,5 mm Kupferdraht (30 Windungen) gewickelt. Der Induktivitätsmeßwert für Carbonyleisenpulver bei 5 MHz wurde gleich 100 % gesetzt und so mit den Meßwerten der Carbonyleisensilicidpulver (5 MHz) vergleichbar gemacht.

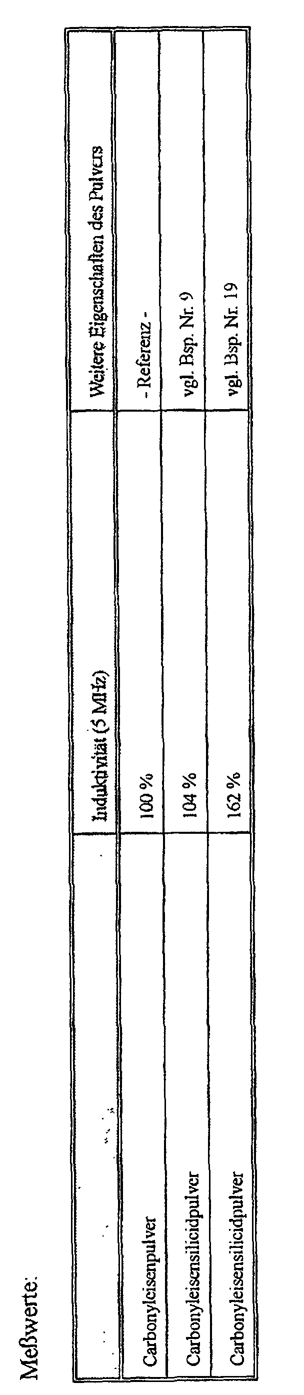

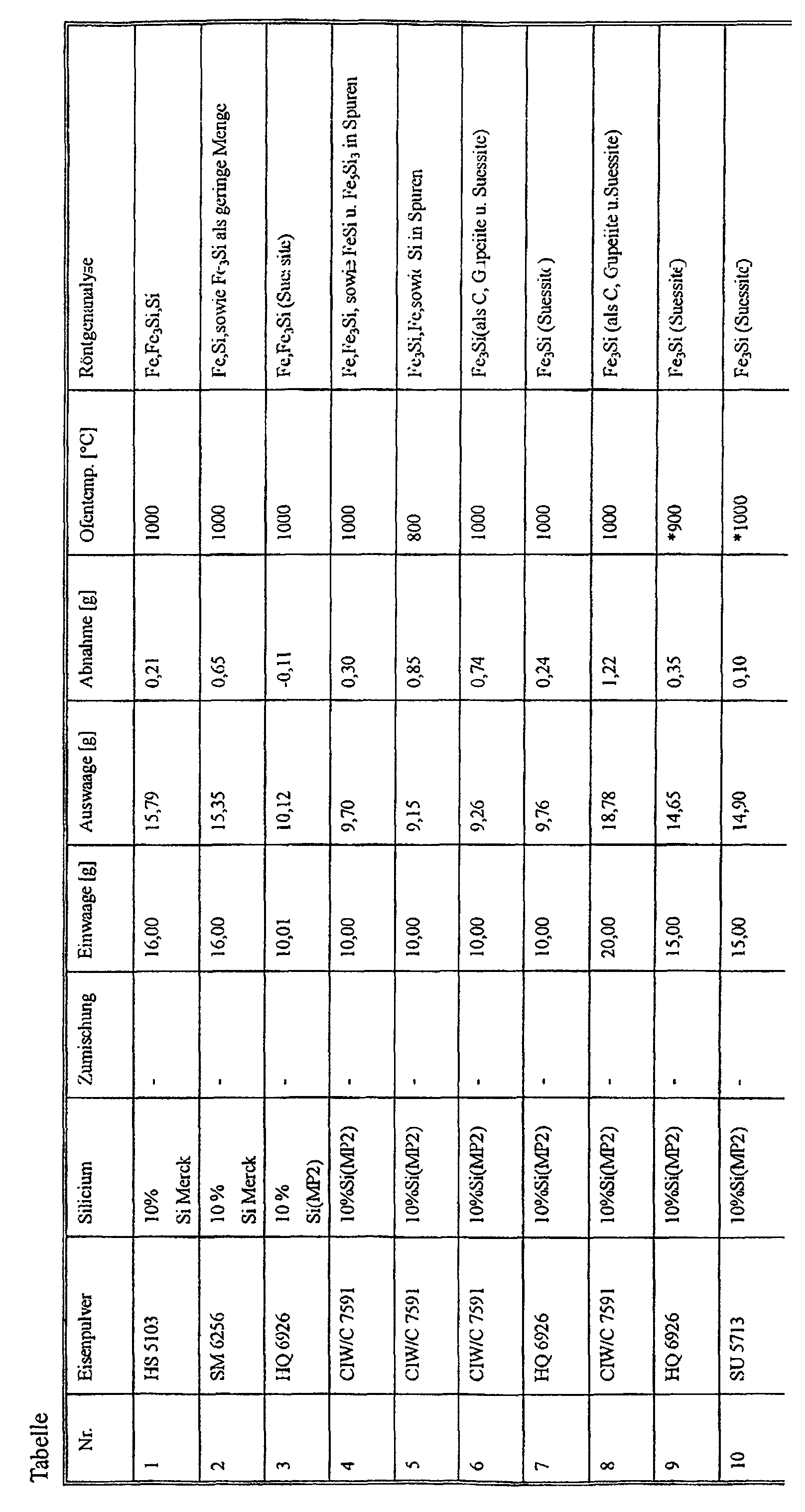

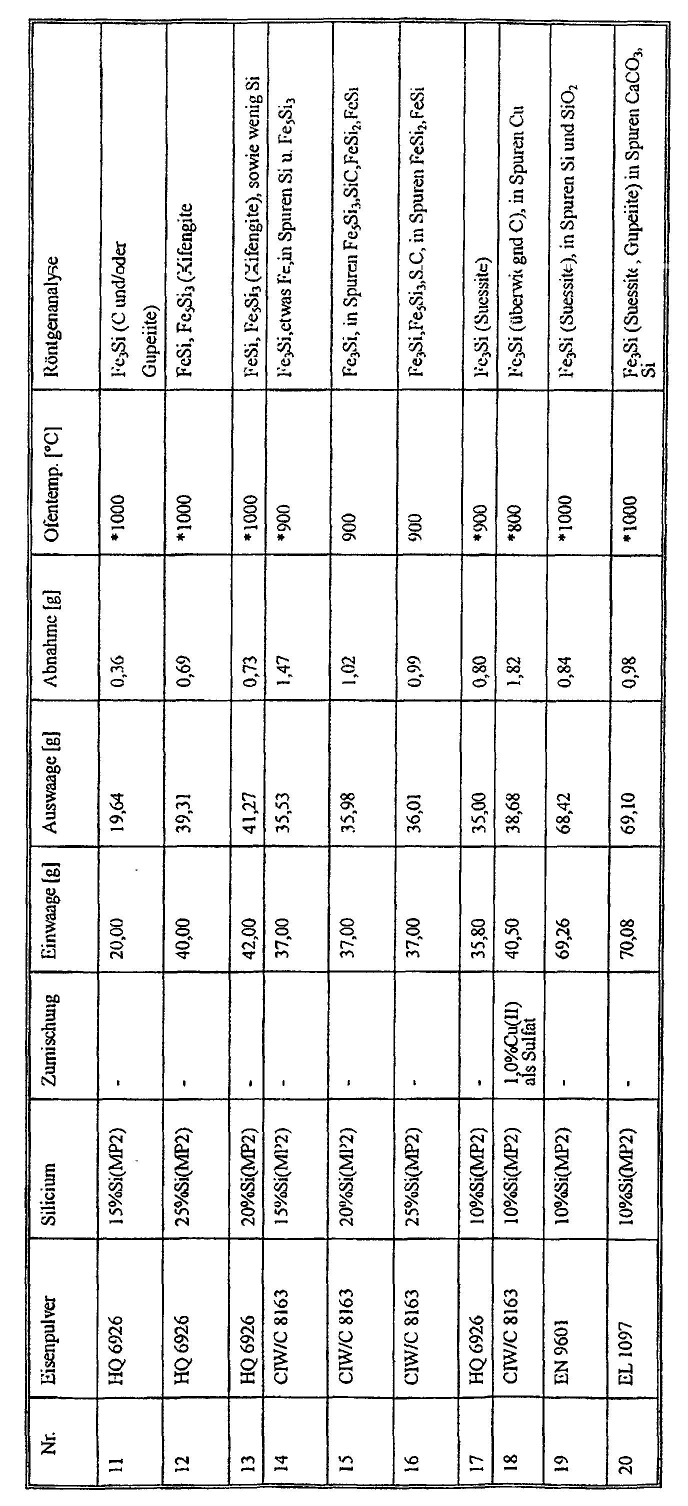

## Patentansprüche

1. , Verfahren zur Herstellung von Carbonyleisensilizid durch Wärmebehandlung einer Eisen-Silizium-Mischung enthaltend
a) 20 bis 99,9 Gew.-% feinteiliges Carbonyleisen und
b) 0,1 bis 80 Gew.-% feinteiliges Siliziumpulver,
wobei die Summe der Komponenten a) und b) 100 Gew.-% ergibt, **dadurch gekennzeichnet, dass** auf eine Temperatur zwischen 500 und 1100°C erhitzt wird.

2. Verfahren nach Anspruch 1, **dadurch gekennzeichnet, daß** die Eisen-Silizium-Mischung zusätzlich
c) 0,1 bis 2 Gew.-% elementares Kupfer und/oder mindestens eine Kupferverbindung, elementares Aluminium und/oder mindestens eine Aluminiumverbindung oder elementares Cobalt und/oder mindestens eine Cobaltverbindung, wobei die Summe der Komponenten a), b) und c) 100 Gew.-% ergibt.

3. Verfahren nach Anspruch 2, **dadurch gekennzeichnet, daß** auf eine Temperatur zwischen 700 und 900°C erhitzt wird.

4. Verfahren nach einem der Ansprüche 1 bis 3, **dadurch gekennzeichnet, dass** in einer reduzierenden Atmosphäre erhitzt wird.

5. Verfahren nach einem der Ansprüche 1 bis 4, **dadurch gekennzeichnet, dass** bei Atmosphärendruck erhitzt wird.

6. Verfahren nach einem der Ansprüche 1 bis 5, bei dem das gebildete Carbonyleisensilizid nach der Wärmebehandlung mechanisch zerkleinert wird.

## Claims

1. A process for preparing carbonyl iron silicide by heat treatment of an iron/silicon mixture comprising
a) from 20 to 99.9% by weight of finely divided carbonyl iron and
b) from 0.1 to 80% by weight of finely divided silicon powder,
where the sum of the components a) and b) is 100% by weight, wherein the iron/silicon mixture is heated to a temperature in the range from 500 to 1100°C.

2. A process as claimed in claim 1, wherein the iron/silicon mixture further comprises
c) from 0.1 to 2% by weight of elemental copper and/or at least one copper compound, elemental aluminum and/or at least one aluminum compound or elemental cobalt and/or at least one cobalt compound, where the sum of the components a), b) and c) is 100% by weight.

3. A process as claimed in claim 2, wherein the iron/silicon mixture is heated to a temperature in the range from 700 to 900°C.

## Revendications

1. Procédé de préparation de siliciure de fer carbonyle par traitement thermique d'un mélange de fer et de silicium contenant
a) de 20 à 99,9% en poids de fer carbonyle finement divisé et
b) de 0,1 à 80% en poids de poudre de silicium finement divisée,
la somme des composants a) et b) donnant 100% en poids, **caractérisé en ce qu'**on chauffe à une température comprise entre 500 et 1100°C.

2. Procédé selon la revendication 1, **caractérisé en ce que** le mélange de fer et de silicium contient en outre
c) de 0,1 à 2% en poids de cuivre élémentaire et/ou d'au moins un composé de cuivre, d'aluminium élémentaire et/ou d'au moins un composé d'aluminium ou de cobalt élémentaire et/ou d'au moins un composé de cobalt, la somme des composants a), b) et c) donnant 100% en poids.

3. Procédé selon la revendication 2, **caractérisé en ce qu'**on chauffe à une température comprise entre 700 et 900°C.

4. Procédé selon l'une des revendications 1 à 3, **caractérisé en ce qu'**on chauffe dans une atmosphère réductrice.

5. Procédé selon l'une des revendications 1, à 4, **caractérisé en ce qu'**on chauffe à la pression atmosphérique.

6. Procédé selon l'une des revendications 1 à 5, **caractérisé en ce qu'**on pulvérise par un moyen mécanique le siliciure de fer carbonyle formé après traitement thermique.
